# EUROPÄISCHE PATENTSCHRIFT

(11) **EP 0 452 295 B1**
(45) Veröffentlichungstag und Bekanntmachung des Hinweises auf die Patenterteilung: **10.11.1993**
(21) Anmeldenummer: 91890045.7
(22) Anmeldetag: 07.03.1991
(51) Int. Cl.: F24F 13/20, F24D 3/14

(54) **Einrichtung zur Bodenheizung bzw. -kühlung für Räume mit Schwingboden und Verfahren zum Verlegen der Einrichtung**
Floor heating or cooling device for rooms with suspended floors and method to lay the device
Dispositif de chauffage ou refroîdissement par le fond des locaux ayant un plancher suspendu et procédé pour poser le dispositif

(30) Priorität: 07.03.1990 AT 536/90
(43) Veröffentlichungstag der Anmeldung: 16.10.1991
(73) Patentinhaber: TOUR & ANDERSSON GESELLSCHAFT m.b.H., 2353 Guntramsdorf (AT); STRAMAX AKTIENGESELLSCHAFT, CH-8004 Zürich (CH)
(72) Erfinder: Scheuchl, Reinhold, Dipl.-Bwt., A-2353 Guntramsdorf (AT); Ramser, Norbert, Dipl.-Ing., A-2630 Ternitz (AT)
(74) Vertreter: Beer, Manfred, Dipl.-Ing.

(56) Entgegenhaltungen:
- EP-B- 0 087 554
- AT-B- 336 220

## Beschreibung

Die Erfindung betrifft eine Einrichtung zum Bodenheizen bzw. -kühlen für Räume mit Schwingboden mit im Hohlraum zwischen einem tragenden, horizontalen Bauteil, beispielsweise einer Decke, und einem Blindboden, auf dem beispielsweise ein Parkett angeordnet ist, angeordneten Heiz- bzw. Kühlrohren und auf diesen aufgesetzten, seitwärts gerichtete Flügel aufweisenden Wärmeverteilelementen, insbesondere Wärmeverteillamellen, wobei der Blindboden über Polsterhölzer und unter diesen angeordnete Schwingelemente am horizontalen Bauteil aufliegt.

Die Erfindung betrifft weiters ein Verfahren zum Verlegen der erfindungsgemäßen Einrichtung.

Eine Einrichtung der eingangs genannten Gattung ist aus der EP-B-0 087 554 bekannt. Bei dieser bekannten Einrichtung sollen die Flügel der Wärmeverteillamellen den Blindboden weder bei belastetem noch bei unbelastetem Boden berühren, wodurch die Flügel der Wärmeverteillamellen keine Vorspannung aufweisen brauchen und deshalb in montiertem Zustand nicht aus der Ebene des zu verlegenden Blindbodens herausragen. Daher sollen sie die Belagsarbeiten nicht behindern können. Ein weiterer Vorteil der aus der EP-B-0 087 554 bekannten Einrichtung soll eine selbsttätige Wärmeregulierung sein, da im Ruhezustand des Schwingbodens beim Heizbetrieb der Wärmeübergang von den Lamellenflügeln zum Blindboden praktisch ausschließlich durch Wärmestrahlung, nicht aber durch Konvektion erfolgen soll, da wegen des geringen Abstandes keine Luftbewegung stattfinden kann.

Nachteilig bei der aus der EP-B-0 087 554 bekannten Einrichtung ist es, daß die Wirkung der Heizung oder Kühlung mangels Wärmeübertragung durch Konvektion oder Konduktion nur sehr langsam eintritt.

Aus der AT-B 336 220 ist ein plattenförmiges Raumheizelement für Bodenheizungen bekannt. Bei diesem Element sind in der Oberseite von Wärmedämmplatten Nuten für die Aufnahme von Leitungsrohren vorgesehen. Zwischen den Wärmedämmplatten und einem Estrich sind Wärmeleitbleche vorgesehen, auf welchen eine Polyethylengleitfolie aufliegt, welche die Unterseite des Estrich abdeckt. Bei diesem bekannten Raumheizelement liegt die Wärmedämmplatte über eine Lage aus Trittschallpappe auf einer Rohbetondecke auf.

Der Erfindung liegt die Aufgabe zugrunde, eine Einrichtung der eingangs genannten Gattung anzugeben, welche die geschilderten Nachteile der bekannten Einrichtung nicht aufweist.

Erfindungsgemäß wird diese Aufgabe dadurch gelöst, daß die Flügel der Wärmeverteilelemente im belasteten und im unbelasteten Zustand des Blindbodens über eine zwischen der Unterseite des Blindbodens und der Oberseite der Flügel der Wärmeverteilelemente eingelegte Kunststoffolie, insbesondere eine zweilagige Polyethylenfolie, an der Unterseite des Blindbodens und an der Oberseite von zwischen den Polsterhölzern angeordneten, wärmedämmenden Platten, in welchen die Heiz- bzw. Kühlrohre aufgenommen sind, anliegen.

Bei der erfindungsgemäßen Einrichtung, die insbesondere für den Einsatz bei Schwingböden in Turnhallen u. dgl. bestimmt ist, wirkt eine Beheizung oder Kühlung im Unterschied zur bekannten Einrichtung (EP-B-0 087 554) durch direkte Wärmeleitung (Konduktion) an den Blindboden bzw. den auf diesem angebrachten Parkettboden und nicht über einen dazwischen liegenden Luftpolster. Durch das Anliegen der Wärmeverteillamellen kann am Oberboden (Blindboden mit Parkett) ein schnelleres und besseres Aufheizen oder Abkühlen erzielt werden als bei dem aus der EP-B- 0 087 554 bekannten System, bei dem der zwischen den Wärmeverteillamellen und dem Blindboden vorgesehene Luftpolster wärmedämmend wirkt. Sinngemäße Vorteile ergeben sich beim Kühlen von Räumen mit der erfindungsgemäß vorgeschlagenen Einrichtung.

In einer Ausführungsform der erfindungsgemäßen Einrichtung ist vorgesehen, daß daß die zwischen den Polsterhölzern angeordneten, wärmedämmenden Platten aus zwei Teilplatten bestehen, wobei die obere Teilplatte vorzugsweises aus Schaumkunststoff besteht und wie an sich bekannt, mit wenigstens einer Vertiefung zur Aufnahme von Heiz- oder Kühlrohren bzw. der Ausformung der Wärmeverteilelemente ausgestattet ist, und daß die untere Teilplatte eine elastische Platte, vorzugsweise eine Platte aus Mineralfaser-Dämmstoff ist.

Bei dieser Ausführung wird das dichte Anliegen der Flügel der Wärmeverteilelemente einerseits an einer unter dem Blindboden angeordneten Kunststoffolie und anderseits an der oberen Teilplatte der wärmedämmenden Platten (Fußbodenheizungselement) zuverlässig gewährleistet.

Die Erfindung erstreckt sich auch darauf, daß zwischen den Polsterhölzern und den zwischen ihnen angeordneten wärmedämmenden Platten beidseitig ein Luftspalt vorgesehen ist, wobei bevorzugt ist, daß der Luftspalt eine Breite von 5 bis 10 mm besitzt. Durch diesen Luftspalt zwischen dem Fußbodenheizungselement und den Polsterhölzern wird ein seitliches Reiben der Bauteile aneinander verhindert. So wird nicht nur das Einfedern der oberen Teilplatten nicht behindert, sondern es werden auch unerwünschte Geräuschquellen ausgeschaltet. Gleichzeitig kann die beim Einfedern des Schwingbodens notwendige Luftbewegung (Verdrängung) über die seitlichen Luftspalte stattfinden.

Die Erfindung erstreckt sich auch auf ein Verfahren zum Verlegen einer Einrichtung zum Bodenbeheizen bzw. -kühlen für Räume mit den Merkmalen der Erfindung, bei dem Polsterhölzer verlegt werden, wobei zwischen den Polsterhölzern und einem horizontalen Bauteil, beispielsweise einer Decke Schwingelemente angeordnet werden, wärmedämmende Platten, vorzugsweise Platten aus einem Mineralfaserdämmstoff, zwischen benachbarte Polsterhölzer eingefügt und auf die wärmedämmenden Platten Platten aus Schaumkunststoff aufgelegt werden, auf bzw. in die Platten Wärmeverteilelemente und Heiz- bzw. Kühlrohre aufbzw. eingelegt werden, wobei die Flügel der Wärmeverteilelemente auf den Platten flächig aufliegen, und bei dem ein Boden, beispielsweise ein Parkett auf dem Blindboden befestigt wird.

Die erfindungsgemäße Verfahrensweise ist dadurch gekennzeichnet, daß auf die Platten bzw. auf die Flügel der Wärmeverteilelemente eine Kunststoffolie und auf diese ein Blindboden aufgelegt und an den Polsterhölzern befestigt wird, wobei die Flügel im belasteten und im unbelasteten Zustand des Blindbodens über die Kunststoffolie an der Unterseite des Blindbodens und an der Oberseite der wärmedämmenden Platten anliegen, daß sowohl jede wärmedämmende Platte als auch jede auf dieser angeordnete Platte mit seitlichem Abstand zwischen die Polsterhölzer eingefügt wird, daß die vor dem Befestigen des Blindbodens an den Polsterhölzern um vorzugsweise 4 bis 8, insbesondere 5 mm über die Oberseite der Polsterhölzer vorstehenden Wärmeverteilelemente beim Befestigen des Blindbodens an den Polsterhölzern zusammen mit den Platten, auf welchen die Wärmeverteilelemente aufliegen, nach unten versetzt werden, so daß die obere Fläche der Wärmeverteilelemente und die oberen Endflächen der Polsterhölzer in einer Ebene liegen.

Bei der erfindungsgemäßen Arbeitsweise werden also in dem mit der Fußbodenheizung (oder -kühlung) auszurüstenden Raum, z.B. einer Turnhalle, zuerst die Polsterhölzer mit den Schwingelementen im vom Bodenhersteller geforderten Abstand verlegt. Zwischen den Polsterhölzern werden die zweiteiligen Fußbodenheizungslemente (untere Teilplatte aus Mineraldämmstoff und obere Teilplatte aus Kunstschaumstoff, insbesondere geschäumtem Polystyrol od. dgl.) verlegt und zwar so, daß zwischen den Fußbodenheizungselementen und den Polsterhölzern ringsum jeweils ein Spalt von etwa 5 mm erhalten bleibt. In diesem Montagestadium überragen die Oberseiten der Fußbodenheizungselemente die Oberkanten der Polsterhölzer um etwa 5 mm. Nun werden in die vorzugsweise zweilagig ausgeführten Fußbodenheizungselemente (die obere Lage hat die Funktion der Führung der Heiz- bzw. Kühlrohre und der Abstützung der Wärmeverteillamellen inne) die Heiz- bzw. Kühlrohre und die Wärmeverteilelemente eingesetzt, wobei die Heiz- bzw. Kühlrohre über die obere Fläche der Fußbodenheizungselemente nicht vorstehen und die Flügel der Wärmeverteilelemente an der oberen Fläche der Fußbodenheizungselemente flächig anliegen. Über die Fußbodenheizungselemente werden nun zwei Lagen aus Polyethylenfolie angelegt, wodurch Geräusche, die durch die Relativbewegung von Schwingboden und Fußbodenheizungselement allenfalls entstehen könnten, weiter gedämpft werden.

Nun wird der Blindboden montiert, wobei die Fußbodenheizungselemente bis auf die Oberkante der Polsterhölzer zusammengedrückt werden, was deshalb ohne weiteres möglich ist, da die untere Teilplatte der Fußbodenheizungselemente aus weichem Mineralfaserdämmfilz besteht, der sich der Höhe nach leicht zusammendrücken läßt. Dadurch ist auch ein Einfedern des Schwingbodens bei Belastung desselben ungehindert möglich. Die elastisch zusammendrückbare, untere Teilplatte aus Mineralfaserdämmfilz gewährleistet weiters eine satte und flächige Anlage der Wärmeverteilelemente bzw. der Flügel derselben an der Unterseite des Blindbodens.

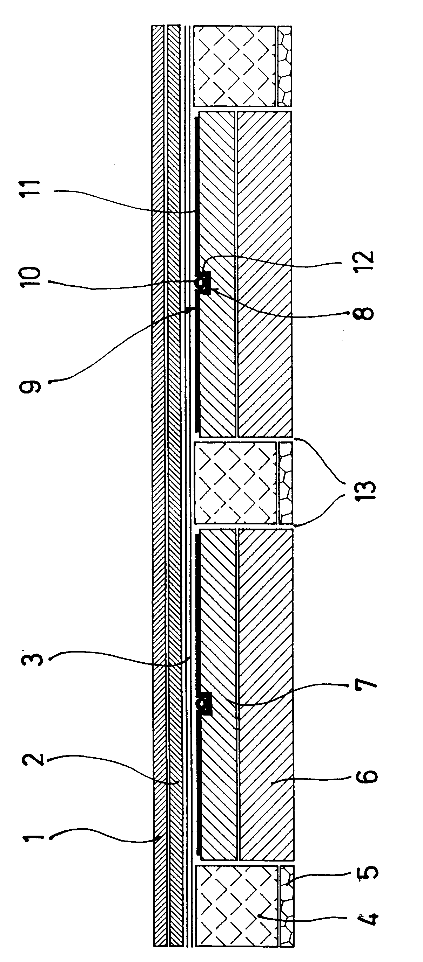

Weitere Einzelheiten und Merkmale der Erfindung ergeben sich aus der nachstehenden Beschreibung einer beispielsweisen Ausführungsform der erfindungsgemäßen Schwingboden-Fußbodenheizung, in der auf die Zeichnung Bezug genommen wird, in der schematisiert ein Schnitt durch eine Schwingboden-Fußbodenheizung dargestellt ist.

Ein Schwingboden, der mit einer erfindungsgemäßen Einrichtung zur Fußbodenheizung ausgestattet ist, besteht aus einem Parkett 1, unter dem ein Blindboden 2 angeordnet ist. Unterhalb des Blindbodens 2 ist im gezeigten Ausführungsbeispiel eine zweilagige Polyethylenfolie 3 angeordnet.

Der Blindboden 2 ist mit Polsterhölzern 4 verbunden, die über Schwingelemente 5 im vom Bodenhersteller vorgegebenen Abstand auf einem in der Zeichnung nicht gezeigten, horizontalen Bauteil, beispielsweise der Oberseite einer Decke, verlegt sind.

Im Raum zwischen zwei jeweils benachbarten Polsterhölzern 4 sind Fußbodenheizungselemente angeordnet, die im gezeigten Ausführungsbeispiel aus zwei Teilplatten 6 und 7 bestehen. Die Fußbodenheizungselemente können auch einteilige Platten, insbesondere Platten aus Mineralfaserfilz, die gegebenenfalls mit einer Metallfolie kaschiert sind, sein. Wesentlich ist, daß wenigstens eine der Teilplatten 6 und 7 oder die einteilige Platte wärmedämmend und elastisch zusammendrückbar ist. Die untere Teilplatte 6 ist eine Platte aus Mineralfaserdämmfilz, der in Richtung quer zu seiner Erstreckung (d.h. in der Zeichnung von oben nach unten) elastisch zusammengedrückt werden kann. Auf der unteren Teilplatte 6 ist die obere Teilplatte 7 des Fußbodenheizungselementes angeordnet. Die obere Teilplatte 7 besteht aus Dämmstoff beispielsweise aus geschäumtem Kunststoff, z.B. geschäumtem Polystyrol und trägt an ihrer Oberseite wenigstens eine nutförmige Vertiefung 12. Die vorgefertigte Nut kann entfallen, wenn die Platte, insbesondere die Teilplatte 7, wenigstens im Bereich ihrer Oberseite weich genug ist, so daß die Heiz- oder Kühlrohre 10, insbesondere wenn diese Stahlrohre sind, einfach eingedrückt werden können. In der nutförmigen Vertiefung 12 an der Oberseite der oberen Teilplatte 7 des Fußbodenheizungselementes ist eine rinnenförmige Ausformung 8 eines beispielsweise aus Aluminiumblech bestehenden Wärmeverteilelementes 9 ("Wärmeverteillamelle") aufgenommen. Die Flügel 11 des Wärmeverteilelementes 9 liegen flächig auf der Oberseite der oberen Teilplatte 7 an. In die offene Seite der rinnenförmigen Ausformung 8 des Wärmeverteilelementes 9 ist ein Heiz- bzw. Kühlrohr 10 mit Klemmsitz aufgenommen.

Wenn in der Zeichnung zwischen dem Parkett 1, dem Blindboden 2, der zweilagigen Polyethylenfolie 3 und den Flügeln 11 des Wärmeverteilelementes 9 jeweils ein Zwischenraum dargestellt ist, so dient dies lediglich der Übersichtlichkeit der Zeichnung. In der Praxis liegen die genannten Bauteile der efindungsgemäßen Einrichtung zur Bodenbeheizung bzw. -kühlung im eingebauten, gebrauchsfertigen Zustand unmittelbar und flächig aneinander an. Dies gilt insbesondere für die Flügel 11 der Wärmeverteilelemente 9, die flächig über die gegebenenfalls vorgesehene zweilagige Polyethylenfolie 3 an der Unterseite des Blindbodens 2 anliegen.

Lediglich zwischen den Teilplatten 6 und 7 der Fußbodenheizungselemente und den Polsterhölzern 4 kann ein Luftspalt 13 vorliegen. Dieser Luftspalt 13 erlaubt eine ungehinderte Bewegung der Teilplatten 6 und 7 und damit des Blindbodens 2 in vertikaler Richtung, ohne daß dabei durch Reibung störende Geräusche entstehen. Die ungehinderte Bewegung kann auch durch eine die Teilplatten 6 und 7 und/oder die Polsterhölzer 4 umschließende Gleitfolie (nicht gezeigt) gewährleistet werden.

Die satte und flächige Anlage der Oberseite der Flügel 11 der Wärmeverteilelemente 9 an der Unterseite des Blindbodens 2 bzw.der dort angeordneten Polyethylenfolie 3 wird dadurch gewährleistet, daß vor der Befestigung des Blindbodens 2 an den Polsterhölzern 4 die Wärmeverteilelemente 9 ein Stück, beispielsweise um 5 mm nach oben über die Oberseite der Polsterhölzer 4 überstehen und erst durch das Befestigen des Blindbodens 2 an den Polsterhölzern 4 unter Zusammendrücken der unteren Teilplatte 6 in eine Lage verschoben werden, in der die Oberseite der Flügel 11 der Wärmeverteilelemente 9 mit der oberen Fläche der Polsterhölzer 4 in einer Ebene liegt.

An Stelle der gezeigten Wärmeverteilelemente 9 können beim erfindungsgemäßen Einrichtung zur Bodenheizung oder -kühlung bei Schwingböden auch größere Wärmeverteilelemente verwendet werden.

## Patentansprüche

1. Einrichtung zum Bodenheizen bzw. -kühlen für Räume mit Schwingboden mit im Hohlraum zwischen einem tragenden, horizontalen Bauteil, beispielsweise einer Decke, und einem Blindboden (2), auf dem beispielsweise ein Parkett (1) angeordnet ist, angeordneten Heiz- bzw. Kühlrohren (10) und auf diesen aufgesetzten, seitwärts gerichtete Flügel (11) aufweisenden Wärmeverteilelementen (9), insbesondere Wärmeverteillamellen, wobei der Blindboden (2) über Polsterhölzer (4) und unter diesen angeordnete Schwingelemente (5) am horizontalen Bauteil aufliegt, dadurch gekennzeichnet, daß die Flügel (11) der Wärmeverteilelemente (9) im belasteten und im unbelasteten Zustand des Blindbodens (2) über eine zwischen der Unterseite des Blindbodens (2) und der Oberseite der Flügel (11) der Wärmeverteilelemente (9) eingelegte Kunststoffolie (3), insbesondere eine zweilagige Polyethylenfolie, an der Unterseite des Blindbodens (2) und an der Oberseite von zwischen den Polsterhölzern (4) angeordneten, wärmedämmenden Platten (7), in welchen die Heiz- bzw. Kühlrohre (10) aufgenommen sind, anliegen.

2. Einrichtung nach Anspruch 1, dadurch gekennzeichnet, daß die zwischen den Polsterhölzern (4) angeordneten, wärmedämmenden Platten aus zwei Teilplatten (6 und 7) bestehen, daß die obere Teilplatte (7) vorzugsweise aus Schaumkunststoff besteht und wie an sich bekannt, mit wenigstens einer Vertiefung (12) zur Aufnahme von Heiz- oder Kühlrohren (10) bzw. der Ausformung (8) der Wärmeverteilelemente (9) ausgestattet ist, und daß die untere Teilplatte (6) eine elastisch federnde Platte, vorzugsweise eine Platte aus Mineralfaser- Dämmstoff ist.

3. Einrichtung nach Anspruch 1 oder 2, dadurch gekennzeichnet, daß zwischen den Polsterhölzern (4) und den zwischen ihnen angeordneten Platten bzw. Teilplatten (6 und 7) seitlich jeweils ein Luftspalt (13) vorgesehen ist, der vorzugsweise eine Breite von 5 bis 10 mm besitzt.

4. Verfahren zum Verlegen einer Einrichtung zum Bodenbeheizen bzw. -kühlen für Räume mit Schwingboden nach einem der Ansprüche 1 bis 3, bei dem Polsterhölzer (4) verlegt werden, wobei zwischen den Polsterhölzern (4) und einem horizontalen Bauteil, beispielsweise einer Decke Schwingelemente (5) angeordnet werden, wärmedämmende Platten (6), vorzugsweise Platten (6) aus einem Mineralfaserdämmstoff, zwischen benachbarte Polsterhölzer (4) eingefügt und auf die wärmedämmenden Platten (6) Platten (7) aus Schaumkunststoff aufgelegt werden, auf bzw. in die Platten (7) Wärmeverteilelemente (9) und Heiz- bzw. Kühlrohre (10) auf- bzw. eingelegt werden, wobei die Flügel (11) der Wärmeverteilelemente (9) auf den Platten (7) flächig aufliegen, und bei dem ein Boden (1), beispielsweise ein Parkett auf dem Blindboden (2) befestigt wird, dadurch gekennzeichnet, daß auf die Platten (7) bzw. auf die Flügel (11) der Wärmeverteilelemente (9) eine Kunststoffolie (3) und auf diese ein Blindboden (2) aufgelegt und an den Polsterhölzern (4) befestigt wird, wobei die Flügel (11) im belasteten und im unbelasteten Zustand des Blindbodens über die Kunststoffolie an der Unterseite des Blindbodens (2) und an der Oberseite der wärmedämmenden Platten (7) anliegen, daß sowohl jede wärmedämmende Platte (6) als auch jede auf dieser angeordnete Platte (7) mit seitlichem Abstand (13) zwischen die Polsterhölzer (4) eingefügt wird, daß die vor dem Befestigen des Blindbodens (2) an den Polsterhölzern (4) um vorzugsweise 4 bis 8, insbesondere 5 mm über die Oberseite der Polsterhölzer (4) vorstehenden Wärmeverteilelemente (9) beim Befestigen des Blindbodens (2) an den Polsterhölzern (4) zusammen mit den Platten (7), auf welchen die Wärmeverteilelemente (9) aufliegen, nach unten versetzt werden, so daß die obere Fläche der Wärmeverteilelemente (9) und die oberen Endflächen der Polsterhölzer (4) in einer Ebene liegen.

5. Verfahren nach Anspruch 4, dadurch gekennzeichnet, daß die Wärmeverteilelemente (9), die vorzugsweise aus Aluminiumblech bestehen, und die vor der Montage des Blindbodens (2) über die oberen Endflächen der Polsterhölzer (4) überstehen, beim Befestigen des Blindbodens (2) unter Verformen der wärmedämmenden Platten (6) nach unten versetzt werden.

6. Verfahren nach Anspruch 4 oder 5, dadurch gekennzeichnet, daß die vorzugsweise zweilagige Kunststoffolie (3), insbesondere eine Polyethylenfolie (3) auf die Polsterhölzer (4), die Wärmeverteilungselemente (9) und die Heiz- bzw. Kühlrohre (10) vor dem Auflegen und dem Befestigen des Blindbodens (2) aufgelegt wird.

## Claims

1. System for heating or cooling floors for spaces with a sprung floor, with heating or cooling pipes (10) arranged in the hollow space between a load-bearing horizontal construction part, for example a ceiling, and a sub-floor (2) on which, for example, an inlaid floor (1) is arranged, and with heat distributing elements (9), in particular heat distributing metal sheets, having sideways directed wings (11) mounted on these pipes, the sub-floor (2) resting on the horizontal construction part through the medium of bridging joists (4) and springing elements (5) arranged under them, characterised in that, in the loaded and unloaded state of the sub-floor (2), the wings (11) of the heat distributing elements (9) bear against the underside of the sub-floor (2) by way of a plastics foil (3), in particular a two-layer polyethylene foil, inserted between the underside of the sub-floor (2) and the top of the wings (11) of the heat distributing elements (9), and against the top of heat insulating slabs (7) arranged between the bridging joists (4) and in which the heating or cooling pipes (10) are accommodated.

2. System according to claim 1, characterised in that the heat insulating slabs arranged between the bridging joists (4) consist of two component slabs (6 and 7), the upper component slab (7) preferably consists of foamed plastic and, as known per se, is equipped with at least one recess (12) for receiving heating or cooling pipes (10) and the depression (8) in the heat distributing elements (9), and the lower component slab (6) is a resiliently springy slab, preferably a slab of mineral fibre insulating material.

3. System according to claim 1 or 2, characterised in that between the bridging joists (4) and the slabs or component slabs (6 and 7) arranged between them, an air gap (13) preferably having a width of 5 to 10 mm is provided at the side in each case.

4. Method of laying a system for heating or cooling floors for spaces with a sprung floor according to any one of claims 1 to 3, wherein bridging joists (4) are laid, springing elements (5) being arranged between the bridging joists (4) and a horizontal construction part, for example a ceiling, heat insulating slabs (6), preferably slabs (6) consisting of a mineral fibre insulating material, being inserted between adjoining bridging joists (4) and slabs (7) consisting of foamed plastic being laid on top of the heat insulating slabs (6), heat distributing elements (9) and heating or cooling pipes (10) being placed on or inserted in the slabs (7) and the wings (11) of the heat distributing elements (9) resting flat on top of the slabs (7), and wherein a floor (1), for example an inlaid floor, is fixed on top of the sub-floor (2), characterised in that a plastics foil (3) is laid over the slabs (7) and the wings (11) of the heat distributing elements (9) and a sub-floor (2) is placed on top of the plastics foil and fixed to the bridging joists (4), the wings (11) bearing against the underside of the sub-floor (2) through the medium of the plastics foil and against the top of the heat insulating slabs (7) in the loaded and unloaded state of the sub-floor (2), both each heat insulating slab (6) and each slab (7) arranged on it is inserted with a lateral interval (13) between the bridging joists (4), and the heat distributing elements (9) projecting by preferably 4 to 8, in particular 5, mm beyond the top of the bridging joists (4) before the fixing of the sub-floor (2) to the bridging joists (4) are shifted downward, together with the slabs (7) on which the heat distributing elements (9) rest, on the fixing of the sub-floor (2) to the bridging joists (4), so that the top face of the heat distributing elements (9) and the top end faces of the bridging joists (4) lie in one plane.

5. Method according to claim 4, characterised in that the heat distributing elements (9), which preferably consist of sheet aluminium and project beyond the top end faces of the bridging joists (4) before the mounting of the sub-floor (2), are shifted downward, with deformation of the heat insulating slabs (6), on the fixing of the sub-floor (2).

6. Method according to claim 4 or 5, characterised in that the preferably two-layer plastics foil (3), in particular a polyethylene foil (3), is placed on top of the bridging joists (4), the heat distributing elements (9) and the heating or cooling pipes (10) before the sub-floor (2) is put and fixed.

## Revendications

1. Dispositif de chauffage ou de refroidissement par le sol pour des locaux équipés de planchers flottants avec, disposés dans l'espace entre un élément de construction horizontal porteur, par exemple un plafond, et un faux-plancher (2) sur lequel est placé par exemple un (1), des tubes (10) de chauffage ou de refroidissement et, placés sur ceux-ci, des éléments répartiteurs de chaleur (9'), notamment des lamelles de répartition de la chaleur, pourvus d'ailettes (11) orientées dans la direction latérale, le faux-plancher (2) reposant sur l'élément de construction horizontal par l'intermédiaire de lambourdes (4) et d'éléments amortisseurs (5), caractérisé par le fait que les ailettes (11) des éléments répartiteurs de chaleur (9), à l'état chargé et à l'état non-chargé du faux-plancher (2), sont appliquées par l'intermédiaire d'un film de matière plastique (3), en particulier un film de polyéthylène à deux couches, disposé entre la face inférieure du faux-plancher (2) et la face supérieure des ailettes (11) des éléments répartiteurs de chaleur (9) contre la face inférieure du faux-plancher (2) et contre la face supérieure de plaques isolantes (7) disposées entre les lambourdes (4) et dans lesquelles sont logés les tubes de chauffage ou de refroidissement (10).

2. Dispositif selon la revendication 1, caractérisé par le fait que les plaques isolantes disposées entre les lambourdes (4) sont formées de deux plaques élémentaires (6 et 7), par le fait que la plaque élémentaire supérieure (7) est de préférence en matière plastique expansée et est pourvue de manière connue en soi d'au moins une cavité (12) recevant des tubes de chauffage ou de refroidissement (10) ou la forme (8) des éléments répartiteurs de chaleur (9) et par le fait que la plaque élémentaire inférieure (6) est une plaque amortissante élastique, de préférence une plaque en matériau isolant à base de fibres minérales.

3. Dispositif selon la revendication 1 ou 2, caractérisé par le fait qu'il est prévu entre les lambourdes (4) et les plaques ou plaques élémentaires (6 et 7) disposées entre celles-ci, sur le côté, un espace (13) qui, de préférence a une largeur comprise entre 5 et 10 mm.

4. Procédé de pose d'un dispositif de chauffage ou de refroidissement par le sol pour des locaux équipés de planchers flottants selon les revendications 1 à 3, procédé selon lequel on pose des lambourdes (4), des éléments amortisseurs (5) étant disposés entre les lambourdes (4) et un élément de construction horizontal, par exemple un plafond, on place entre des lambourdes (4) voisines des plaques (6) calorifuges, de préférence des plaques (6) en matériau isolant à base de fibres minérales, et, sur les plaques calorifuges (6) des plaques (7) de matière plastique expansée, on pose sur ou dans les plaques (7) des éléments répartiteurs de chaleur (9) ainsi que des tubes de chauffage ou de refroidissement (10), les ailettes (11) des éléments répartiteurs de chaleur (9) étant appliquées à plat sur les plaques (7), et on fixe sur le faux-plancher (2) un plancher (1), par exemple un parquet, procédé caractérisé par le fait que l'on pose sur les plaques (7) ou sur les ailettes (11) des éléments répartiteurs de chaleur (9) un film de matière plastique (3) et, sur celui-ci, un faux-plancher (2) que l'on fixe sur les lambourdes (4), les ailettes (11), à l'état chargé et à l'état non-chargé du faux-plancher (2) étant appliquées par l'intermédiaire du film de matière plastique (3) contre la face inférieure du faux-plancher (2) et la face supérieure des plaques isolantes (6), par le fait chaque plaque (7) calorifuge et chaque plaque (7) posée sur celle-ci est placée entre les lambourdes (4) à distance (13) sur le coté de celles-ci, par le fait que les éléments répartiteurs de chaleur (9) qui, avant la fixation du faux plancher (2) sur les lambourdes (4), dépassent de préférence de 4 à 8 mm, en particulier de 5 mm au dessus de la face supérieures des lambourdes (4) et les plaques (7) sur lesquelles reposent les éléments répartiteurs de chaleur (9), lors de la fixation du faux-plancher (2) sur les lambourdes (4) sont repoussés vers le bas de manière telle que la surface supérieure des éléments répartiteurs de chaleur (9) et les faces supérieures des lambourdes (4) sont situées dans un plan.

5. Procédé selon la revendication 4, caractérisé par le fait que les les éléments répartiteurs de chaleur (9) qui de préférence sont en tôle d'aluminium et avant montage du faux-plancher dépassent au-dessus des faces supérieures des lambourdes (4) sont déplacées vers le bas avec déformation des plaques (6) calorifuges au moment de la fixation du faux-plancher (2).

6. Procédé selon la revendication 4 ou 5, caractérisé par le fait que, avant de procéder à la pose et la fixation du faux-plancher (2), on pose le film de matière plastique (3), de préférence à deux couches, en particulier un film de polyéthylène (3), sur les lambourdes (4), les éléments répartiteurs de chaleur (9) et les tubes de chauffage ou de refroidissement (10).
